# EUROPÄISCHE PATENTSCHRIFT

(11) **EP 2 510 984 B1**
(45) Veröffentlichungstag und Bekanntmachung des Hinweises auf die Patenterteilung: **07.08.2019**
(21) Anmeldenummer: 12154264.1
(22) Anmeldetag: 07.02.2012
(51) Int. Cl.: A62C 37/36, G08B 17/06, A62C 37/11, G08B 17/02, F16K 11/07, F16K 17/38, F16K 31/08, A62C 37/40

(54) **Fremdenergieunabhängiger Melder**
Energy independent activator for an extinguisher
Activateur indépendant de l'énergie extérieure pour un extincteur

(30) Priorität: 17.02.2011 EP 11154772
(43) Veröffentlichungstag der Anmeldung: 17.10.2012
(73) Patentinhaber: Minimax GmbH & Co. KG, 23840 Bad Oldesloe (DE)
(72) Erfinder: Zlatintsis, Chrysafis, 23840 Bad Oldesloe (DE)
(74) Vertreter: Eisenführ Speiser

(56) Entgegenhaltungen:
- EP-A1- 0 824 027
- DE-A1- 19 945 856
- JP-A- 2006 268 546

## Beschreibung

Die Erfindung betrifft einen fremdenergieunabhängigen Melder nach dem Oberbegriff des ersten Patentanspruches.

Der Melder ist überall dort einsetzbar, wo nach einer Temperaturänderung bei einer definierten Temperatur für Signalisierungs-, Schalt- und/oder Steuerzwecke ein Signal zu erzeugen ist und keine elektrische Energie durch eine Batterie, einen Akkumulator oder eine andere Stromversorgung vorhanden ist oder diese nicht sicher und regelmäßig zur Verfügung steht. Das kann beispielsweise bei Löschvorrichtungen wie Löschanlagen oder Vorrichtungen zur Löschmittelbevorratung wie z. B. einem Feuerlöscher, der durch eine energieunabhängige Auslöseeinrichtung ausgelöst werden soll, oder bei anderen autonomen Systemen zur Überwachung der Fall sein. So kann ein brandgefährdeter Bereich fremdenergieunabhängig, ohne Batterie, ohne Akkumulator oder andere Stromversorgung überwacht werden und bei überschreiten einer definierten Temperatur ein erzeugtes Spannungs- oder Stromsignal zur Signalisierung oder Steuerung von Folgeaktionen genutzt werden. Weiterhin lassen sich hiermit Überlastsicherungen realisieren, die bei Überschreiten der Solltemperatur ansprechen und z.B. die Abschaltung eines Gerätes bewirken oder ein Störungssignal absetzen. Speziell in autarken Einheiten die möglichst lange funktionieren müssen wie in Fahrzeugen aller Art, im Weltraum etc.

DE 199 45 856 B4 beschreibt eine Sprinklervorrichtung mit einem Ventil, das bei vorgegebenen Kriterien öffnet, wobei dieses Ventil durch einen Sensor angesteuert wird, der schnell auf Parameter anspricht, die bei einem Feuer entstehen, wobei mehrere Sensoren vorgesehen sind, die mittels eines Auswertealgorithmus das Ventil ansteuern und die Sensoren auf verschiedene Parameter des Feuers ansprechen können. In einer besonderen Ausführungsvariante beschreibt das Dokument ein Glasröhrchen, an dem ein piezoelektrisches Verhalten zum Auslösen eines Alarms genutzt wird. Die Stromversorgung erfolgt mittels elektrischer Leitung und Batterie.

US 2009/0301601 A1 verwendet einen Piezo-Zünder, welcher durch Auslösen eines Druckknopfes eine Funkenspannung erzeugt wie aus jedem Feuerzeug bekannt, mit dessen Hilfe ein Verbrennungsprozess gestartet wird, dessen Abgase für weitere Prozesse genutzt werden.

US 2007/0215362 A1 beschreibt ein Feuerlöschsystem, bei dem an einer Feuerlöschdüse eine Abdeckplatte mit einem Schmelzlot angeordnet ist, mittels eines piezoelektrischen Schalters ist ein Alarmauslösen möglich. Sobald eine bestimmte Temperatur überschritten ist, schmilzt das Schmelzlot und die Abdeckplatte des Sprinklergehäuses fällt herunter, wobei ein Schalter Alarm auslöst. In diesem Dokument wird ein als piezoelektrischer Schalter bezeichnetes Gerät erwähnt, bei dem es sich in Wirklichkeit um einen piezoelektrischen akustischen Signalgeber handelt.

US 2011/0278029 A1 beschreibt eine eigenständige selbstauslösende modulare Feuerunterdrückungseinheit, die an einer Decke montiert sein kann. Auf einer Leiterplatte befindet sich ein Piezo-Element, welches durch einen Rauchsensor ausgelöst wird und ein akustisches Signal auslöst. Auf einer Leiterplatte auf einem Tankdeckel befindet sich ein Glasröhrchen, welches bei Hitze birst. Das Glasröhrchen wirkt gegen eine Feder und einen Schalter, der ein Alarmsignal auslöst. Für die Energieversorgung der Vorrichtung sind Batterien vorgesehen.

JP 206 368 546 A offenbart einen fremdenergieunabhängigen Melder mit einem thermischen Auslöseelement, für den keine Batterie, kein Akkumulator und keine externe Stromversorgung vorgesehen ist und der bei einer definierten Temperatur mittels Piezoelementes ein Spannungs- bzw. Stromsignal für Signalisierungs-, Schalt- oder Steuerzwecke erzeugt und bei dem eine Spiralfeder, in um eine Achse angeordnet ist, die eine Kraft und eine Drehbewegung auf den Zahnkranz eines Kegelradgetriebes ausübt, das die Drehbewegung der Spiralfeder auf ein sich drehendes Element überträgt, welches ein elektrisches Signal mittels eines Schlagmittels entstehen lässt. Das thermische Auslöseelement stellt ein Memory-Metallelement dar. Der Melder weist durch eine Vielzahl sich drehender Teile eine komplizierte Bauweise auf.

Nachteilig an diesem Melder ist die Vielzahl von Teilen, die Drehbewegungen ausführen und dabei blockieren können, was für einen Melder ein Sicherheitsrisiko darstellt.

Es ist daher Aufgabe der Erfindung, einen Melder, der keine Batterie, keinen Akkumulator und keine externe Stromversorgung benötigt, zu entwickeln, dessen Aufbau einfach ist und keine aufwendigen und störanfälligen Übertragungselemente aufweist.

Diese Aufgabe wird durch einen fremdenergieunabhängigen Melder für Signalsierungs-, Schalt- und Steuerzwecke nach den Merkmalen des ersten Patentanspruches gelöst.

Die erfindungsgemäße Lösung sieht einen fremdenergieunabhängigen Melder vor, der ein Signal für Signalisierungs-, Schalt- und/oder Steuerzwecke auf Grund von Temperaturänderungen erzeugt. Das kann ein Signal für einen Alarm, ein Signal für eine Brandmelder- und/oder Löschsteuerzentrale, für eine Auslöseeinnrichtung wie ein Ventil oder eine andere Überwachungs- oder Sicherheitseinrichtung sein, wenn eine definierte Temperatur erreicht wird. Der Melder kann vorteilhafterweise auch als Überlastsignalgeber verwendet werden, der die zu hohe oder zu niedrige Temperatur eines Gerätes, Bauteils oder Raumes signalisiert und/oder einen Steuer- oder Abschaltmechanismus auslöst.

Der Melder kann überall dort eingesetzt werden, wo bei einer definierten Temperatur ein Signal ausgelöst werden soll. Das kann zum Beispiel das Auftreten eines Brandereignisses sein oder die Temperaturerhöhung in einer zu überwachenden Einrichtung wie zum Beispiel in Schaltschränken.

So kann in einer beispielhaften Anwendung der fremdenergieunabhängige Melder zum Schutz von Kücheneinrichtungen wie z.B. Friteusen und anderen fettaufheizenden Geräten eingesetzt werden.
Auch zur Sicherung und Überwachung von thermischen Verfahrensprozessen, von Öfen, Motoren, Fahrzeugen, Flugzeugen und Schiffen und anderen mobilen und stationären Objekten und ist dieser Melder einsetzbar.

Der erfindungsgemäße Melder besteht aus mindestens einem Piezoelement, einem thermischen Auslöselement, einem Koppelelement und einem Gehäuse und/oder Rahmen, in dem alle diese Komponenten funktional angeordnet sind.

Das thermische Auslöseelement ist so beschaffen, dass es durch thermische Einwirkung zerstört wird oder seine Struktur ändert. Es kann schmelzen, schrumpfen oder weich werden. Es kann auch seinen Aggregatzustand oder seine räumlichen Abmaße ändern. In diesem Fall besteht das thermische Auslöseelement aus einem Material, welches sich durch Temperaturänderung in mindestens einer Raumrichtung in seiner Länge ändert, d.h. sich ausdehnt oder verkürzt. Vorteilhaft ist auch der Einsatz von Memorymetallen. Vorteilhaft ist es, wenn das Auslöseelement eine flüssigkeitsgefüllte Glasampulle wie sie z.B. in Sprinklern verwendet wird, ein Schmelzlot ein Kunststoffelement oder ein Metallstab oder ein pyrotechnisches Element darstellt.

Das Koppelelement übt eine Kraft auf das Piezoelement aus, wenn bei einer definierten Temperatur das thermische Auslöselement seinen Zustand ändert. Dieses Koppelelement kann z.B. durch vorgespannte Federn oder andere elastisch verformte Teile bzw. durch Kraftübertragende Teile wie z.B. Stößel realisiert werden. Die Anordnung des thermischen Auslöseelementes, des Koppelelementes und des Piezoelements in einem Gehäuse/Halterung ist so gewählt, dass durch die Zustandsänderung des thermische Auslöselements bei einer definierten Temperatur die gespeicherte potentielle Energie der Feder oder des elastisch verformten Teiles freigegeben wird und die resultierende Kraft einen mechanischen Druck auf das Piezoelement ausübt und über den Piezoeffekt ein Spannungssignal wird erzeugt. Die erzeugte Spannung kann mehrere 100 V betragen. Es ist vorteilhaft mehrere mechanisch in Serie und elektrisch parallel geschaltete Piezoelemente zu verwenden. Das Koppelelement kann auch ein Kleber bzw. Luftspaltsein, so dass die Zustandsänderung des thermischen Auslöseelementes, z.B. ein pyrotechnisches, direkt auf das Piezoelement übertragen wird und auf dieses eine Kraft und einen mechanischen Druck ausübt

Bei Verwendung von thermischen Auslöseelementen, die bei definierten Temperaturen eine Längen- oder Volumenzunahme bzw. Aggregatszustandsänderung aufweisen, bewirkt diese Zustandsänderung des thermischen Auslöseelementes eine Kraftwirkung direkt über das Koppelelement zur Erzeugung des mechanischen Drucks auf das Piezoelement oder indirekt über die Freisetzung der im Koppelelement gespeicherte potentielle Energie.

Als Piezoelement kann jedes Material verwendet werden, welches einen Piezoeffekt erzeugt, z.B. piezoelektrische Kristalle wie Quarz, Lithiumniobat, Galliumorthophosphat oder piezoelektrische Keramiken wie Blei-Zirkonat-Titanate oder Blei-Magnesium-Niobate oder dünne Schichten aus Zinkoxid oder Aluminiumnitrid bzw. Kunststoffe wie Polyvinylidenfluorid .

Die vom Piezoelement erzeugte Spannung kann an Anschlüssen oder Kabeln am Melder zur Signalverarbeitung oder Signalbereitstellung verwendet werden Teile des Melders wie der Rahmen können als spannungsführende Teile ausgebildet sein, um die Zahl der Kabelverbindungen zu verringern.
Optional kann über eine zusätzliche elektrische Schaltung eine Ladungsverstärkung der am Piezoelement erzeugten Ladungen und/oder weitere Signalaufbereitungen wie z.B. die Impedanzanpassung an die weitere Signalverwendung stattfinden.

Die elektrischen Spannungen/Ströme aus dem Piezoelement werden über elektrisch leitfähige Komponenten des Melders oder Kabel abgeführt und können innerhalb und/oder außerhalb des Melders ausgewertet werden, z.B. mittels einer dafür vorgesehenen elektronischen Schaltung.

In einer bevorzugten Ausführung wird das im Melder generierte Spannungssignal/Stromsignal direkt über Kabel an ein elektrisch steuerbares Element geleitet. Das kann ein Magnetventil sein oder ein elektrisch deaktivierbarer Elektropermanentmagnet. Denkbar sind aber auch bistabile Relais oder Stromstossschalter zur Schaltung größerer elektrischer Lasten: Weiterhin kann durch das erzeugte Spannungssignal andere Auslösekomponenten bestehend aus Pyrotechnischen- oder Sprengstoffmaterialien ansteuern bzw. zünden.

In einer weiter bevorzugten Ausführung wird bei Erreichen einer definierten Temperatur durch das thermische Auslöseelement die erzeugte Spannung am Piezoelement über ein Kabel zu einem Elektropermanentmagneten geleitet, wodurch die Haftkraft des Magneten aufgehoben wird und der Doppelkolben durch die Federkraft bewegt wird, wodurch ein Ventil geöffnet wird. Der Elektropermanentmagnet besteht aus einem Permanentmagnet mit einer Spule die bei Stromdurchfluss zur Entmagnetisierung des Permanentmagnetes dient, ist also ein elektrisch entmagnetisierbarer Permanentmagnet.

In einer weiteren bevorzugten Ausgestaltung sendet der Melder ein elektrisches Signal an eine Brandmelder- und/oder Löschsteuerzentrale. Denkbar ist aber auch eine andere Auswerteeinrichtung wie eine Steuereinrichtung für eine andere Vorrichtung.

Der erfindungsgemäße Melder hat den Vorteil, dass er keine Fremdenergie in Form von Batterien, Akkumulatoren oder einen externe Stromversorgung benötigt, wodurch eine zuverlässige, über sehr lange Zeiträume wirksam bleibende, preiswerte und wenig materialaufwendige Auslöseeinrichtung für Schalt- und Steuerzwecke entsteht.

Im Folgenden soll die Erfindung an Ausführungsbeispielen und fünf Figuren näher erläutert werden. Die Figuren zeigen:
- Figur 1:: Schematische Darstellung des fremdenergieunabhängigen Melders mit direkter Wirkung auf die Auslöseeinrichtung einer Löschvorrichtung
- Figur 2:: Schematische Darstellung des fremdenergieunabhängig wirkenden Melders mit Signalweitergabe an eine Brandmelder- und/oder Löschsteuerzentrale.
- Figur 3:: Schematische Darstellung eines fremdenergieunabhängigen Melders mit einer Sprinklerampulle oder Schmelzlot als thermisches Auslöseelement.
- Figur 4:: Schematische Darstellung eines fremdenergieunabhängigen Melders mit einem pyrotechnischen Element als thermisches Auslöseelement.
- Figur 5:: Schematische Darstellung eines fremdenergieunabhängigen Melders mit direkter Wirkung eines thermischen Auslöseelement.

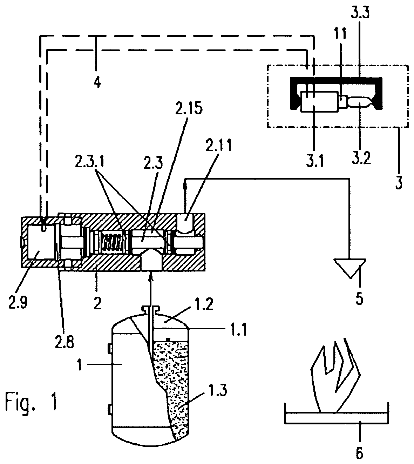

*Figur 1* zeigt den fremdenergieunabhängigen Melder 3 an der Auslöseeinrichtung einer Löschvorrichtung. Der Melder 3, bestehend aus einem Piezoelement 3.1, dem thermischen Auslöselement 3.2 und dem Koppelelement 11 sowie der Halterung oder Gehäuse 3.3. Das thermische Auslöselement 3.2 stellt eine Sprinklerampulle oder ein Schmelzlot dar. Bei erreichen einer definierten Temperatur kommt es zu einer Zustandsänderung des thermischen Auslöseelementes 3.2, es birst die Sprinklerampulle oder schmilzt das Schmelzlot.
Die Anordnung des thermischen Auslöseelementes 3.2, des Koppelelementes 11 und des Piezoelements 3.1 im Gehäuse/Halterung 3.3 ist so ausgelegt, dass durch die Zustandsänderung des thermischen Auslöseelements 3.2 bei einer definierten Temperatur über das Koppelelement 11 eine Kraft bzw. ein mechanischer Druck auf das eine Piezoelement 3.1 ausgeübt wird und über den Piezoeffekt ein Spannungssignal erzeugt wird.

Der Melder 3 wird über dem Schutzobjekt 6 positioniert, um bei einer definierten Temperatur, z.B. im Temperaturbereich 70 bis 300 Grad Celsius einen Signalisierungs-, Steuer- oder Schaltvorgang zu ermöglichen. Im vorliegenden Beispiel liegt der Temperaturbereich in dem Bereich, in dem ein Brand entsteht.
Das Kabel 4 verbindet die Anschlüsse 14 des Piezoelementes 3.1 bzw. des Melders 3 mit den Anschlüssen des elektrisch auslösbaren Ventils 2. Das Ventil 2 verschließt die Öffnung des Löschmittelbehälters 1, in dem sich das Treibgas 1.2 und des Löschmittel 1.3 befinden. Das Steigrohr 1.1 dient zum austragen des Löschmittels 1.3 über das Ventil 2 zu der Löschdüse 5 über dem Schutzobjekt 6. Die Aktivierung der Auslöseeinrichtung, dem Ventil 2, erfolgt im Brandfall über das thermische Auslöseelement 3.2.
Das so erzeugte Spannungssignal wird über das Kabel 4 zum
Elektropermanentmagneten 2.9 geleitet wird. Die kurzzeitig anliegende Spannung genügt, um das Magnetfeld des Permanentmagneten 2.9 bzw. seine Haftkraft aufzuheben. Der Doppelkolben 2.3 wird freigegeben und durch die Federkraft der Druckfeder 2.4 in die geöffnete Ventilstellung bewegt. Das unter Permanentdruck eines Treibgases 1.2 stehende Löschmittel 1.3 wird über ein Steigrohr 1.1 zu den Löschdüsen 5 befördert, wodurch der Brand am Objekt 6 gelöscht wird.

In der betriebsbereiten Stellung (Ventil geschlossen) haftet der Doppelkolben 2.3 mittels der Stahlscheibe 2.8 an dem Permanentmagneten 2.9. Die Druckfeder 2.4 ist in gespannter Stellung, die Federkraft ist geringer als die Haftkraft des Permanenthaftmagneten 2.9.
In der Druckkammer 2.15 wirkt der Löschmitteldruck an zwei gleich dimensionierten Kolben 2.3.1. Die Druckkräfte an beiden Kolben 2.3.1 heben sich gegenseitig auf. Auf dem Kolben wirkt keine resultierende Druckkraft. Das Löschmittel 1.3 befindet sich in der Druckkammer 2.15 in Ruhezustand.

Bei einer Aktivierung der Auslöseeinrichtung wird der Elektropermanenthaftmagneten 2.9 mit einem Spannungsimpuls kommend aus dem Piezoelement 3.1 beaufschlagt. Dadurch wird die Haftkraft des Permanenthaftmagneten 2.9 kurzzeitig aufgehoben und die Kraft der Druckfeder 2.4 freigegeben. Die Druckfeder 2.4 bewegt den Doppelkolben 2.3 in die geöffnete Stellung und das Löschmittel 1.3 kann um den Doppelkolben 2.3 aus dem Löschmittelaustrittstutzen 2.11 zu den Düsen 5 geleitet werden.

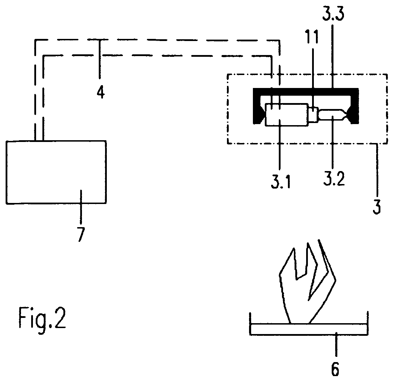

Die *Figur 2* zeigt ein System mit einer Auswertevorrichtung 7, in diesem Fall mit einer Brandmelder- und Steuerzentrale, die das Signal des Melders 3 im Brandfall empfängt und/oder den Löschvorgang einleitet.

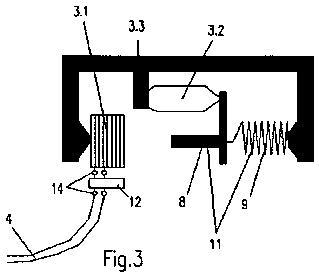

In Figur 3 ist die schematische Darstellung eines fremdenergieunabhängigen Melders mit einer Sprinklerampulle oder Schmelzlot als thermisches Auslöseelement 3.2.
Bei Erreichen einer definierten Temperatur birst die Sprinklerampulle oder schmilzt das Schmelzlot und gibt die gespeicherte potentielle Energie der Feder 9 frei und der Stößel 8 wird in Richtung des Piezoelementes 3.1 bewegt. Somit wird über das Koppelelement 11, welches aus der Feder 9 und dem Stößel 8 besteht, eine Kraft bzw. ein mechanischer Druck auf das Piezoelement 3.1 ausgeübt, wobei an den Anschlüssen 14 ein Spannungssignal für Signalisierung,- Schalt oder Steuerungszwecke abgreifbar ist. Über die Schaltung 12 findet eine Ladungsverstärkung der am Piezoelement 3.1 erzeugten Ladungen statt und/oder die weiteren Signalaufbereitungen wie z. B. die Impedanzanpassung an die weitere Signalverwendung statt.

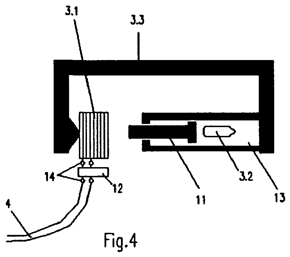

Figur 4 stellt einen fremdenergieunabhängigen Melder 3 mit einem pyrotechnischen Element als thermisches Auslöseelement 3.2 dar. Das pyrotechnische Auslöseelement 3.2 ist in einem Gasausdehnungsraum 13 angeordnet. Bei erreichen einer definierten Temperatur zündet das pyrotechnische Element und erzeugt im Gasausdehnungsraum 13 einen Druckstoß welcher auf das Koppelelement 11 in Form eines Stößels wirkt. Über das Koppelelement 11 wird eine Kraft bzw. ein mechanischer Druck auf das Piezoelement 3.1 ausgeübt, wobei an den Anschlüssen 14 ein Spannungssignal für Signalisierung,- Schalt oder Steuerungszwecke abgreifbar ist. Über die Schaltung 12 findet eine Ladungsverstärkung der am Piezoelement 3.1 erzeugten Ladungen und/oder weitere Signalaufbereitungen wie z.B. die Impedanzanpassung an die weitere Signalverwendung statt.

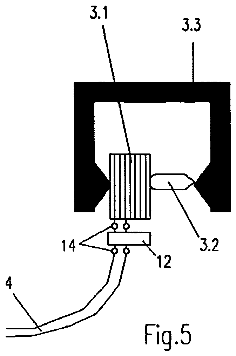

Figur 5 stellt einen fremdenergieunabhängigen Melder mit einem pyrotechnischen Element oder einem Memorymetallelement als thermisches Auslöseelement 3.2 dar. Dieses Auslöseelement ist direkt an dem Piezoelement 3.1 angebracht. Bei Erreichen einer definierten Temperatur zündet das pyrotechnische Element bzw. dehnt sich das Memorymetallelement aus und erzeugt eine Kraft bzw. ein mechanischen Druck direkt auf das Piezoelement 3.1 und an den Anschlüssen 14 ist ein Spannungssignal für Signalisierung,- Schalt oder Steuerungszwecke abgreifbar. Das Koppelelement 11 reduziert sich in diesem Fall auf eine Berührungsfläche bzw. Befestigungsfläche oder Luftspalt zwischen dem thermischen Auslöseelement 3.2 und dem Piezoelement 3.1. Im vorliegenden Fall findet über die elektrische Schaltung 12 eine Ladungsverstärkung der am Piezoelement 3.1 erzeugten Ladungen und/oder weitere Signalaufbereitungen wie z.B. die Impedanzanpassung an die weitere Signalverwendung statt.

Die Figuren 3 bis 5 zeigen, dass die Anordnung des thermischen Auslöselementes 3.2, des Koppelelementes 11 und des Piezoelements 3.1 im Gehäuse/Halterung 3.3 so ausgelegt ist, dass durch die Zustandsänderung des thermischen Auslöseelements 3.1 bei einer definierten Temperatur über das Koppelelement 11 eine Kraft bzw. ein mechanischer Druck auf das Piezoelement 3.1 ausgeübt wird.

### Liste der verwendeten Bezugszeichen

- 1: Löschmittelvorratsbehälter
- 1.1: Steigrohr
- 1.2: Treibgas
- 1.3: Löschmittel
- 2: Ventil
- 2.3: Doppelkolben
- 2.3.1.: Kolben
- 2.4: Druckfeder
- 2.8: Stahlscheibe
- 2.9: elektrisch entmagnetisierbarer Permanentmagnet
- 2.11: Löschmittelaustrittsstutzen
- 2.15: Druckkammer
- 3: fremdenergieautarker Melder
- 3.1: Piezoelement
- 3.2: thermisches Auslöseelement
- 3.3: Halterung/Gehäuse
- 4: Kabel
- 5: Düse
- 6: Schutzobjekt
- 7: Auswertevorrichtung

- 8: Stößel
- 9: Feder
- 11: Koppelelement
- 12: elektrische Schaltung
- 13: Gasausdehnungsraum
- 14: Anschlüsse

## Patentansprüche

1. Fremdenergieunabhängiger Melder (3), für den keine Batterie, kein Akkumulator und keine externe Stromversorgung vorgesehen ist und der bei einer definierten Temperatur ein Spannungs- bzw. Stromsignal für Signalisierungs-, Schalt- oder - Steuerzwecke erzeugt
**wobei**
ein thermisches Auslöseelement (3.2), mindestens ein Piezoelement (3.1) und ein Koppelelement (11) in einer Halterung/Gehäuse (3.3) so angeordnet sind, dass durch eine Zustandsänderung des thermischen Auslöseelements (3.2) über das Koppelelement (11) ein mechanischer Druck auf das Piezoelement (3.2) ausgeübt wird, so dass ein elektrisches Signal
entsteht und das thermische Auslöseelement (3.2), bei einer definierten Temperatur eine Längen- oder Volumenzunahme bzw. Aggregatszustandsänderung aufweist, **dadurch gekennzeichnet, dass** das thermische Auslöselement (3.2) eine Kraftwirkung direkt über das Koppelelement zur Erzeugung des mechanischen Drucks auf das Piezoelement bewirkt.

2. Melder (3) nach Anspruch 1, **dadurch gekennzeichnet, dass** das thermische Auslöseelement (3.1) eine Sprinklerampulle, ein Schmelzlot, ein Memorymetallelement oder Pyroelement darstellt.

3. Melder (3) nach den Ansprüchen 1 und 2, **dadurch gekennzeichnet, dass** eine Ladungsverstärkung der am Piezoelement (3.2) erzeugten Ladungen und/oder eine weitere Signalaufbereitung Signalverwendung über eine Schaltung (12) erfolgen.

4. Melder (3) nach einem der Ansprüche 1 bis 3, **dadurch gekennzeichnet, dass** das Koppelelement mindestens eine Feder (9) und/oder einen Stößel (8) darstellt.

5. Melder (3) nach einem der Ansprüche 1 bis 4, **dadurch gekennzeichnet, dass** das durch den Melder (3) erzeugte elektrische Signal über ein Kabel (4) an eine Auswerteeinrichtung (7) oder ein Ventil (2) geleitet wird.

6. Melder (3) nach Ansprüche 5, **dadurch gekennzeichnet, dass** die Auswerteeinrichtung (7) eine Brandmelder- und/oder Steuerzentrale darstellt.

7. Melder (3) nach Anspruch 5, **dadurch gekennzeichnet, dass** das Ventil (2) einen elektrisch entmagnetisierbaren Permanentmagneten (2) enthält.

## Claims

1. Detector (3) which is independent of external energy and for which no battery, no accumulator and no external power supply is provided and which at a defined temperature produces a voltage or current signal for signalling, switching or control purposes,
wherein
a thermal trigger element (3.2), at least one piezoelement (3.1) and a coupling element (11) are arranged in a retention member/housing (3.3) in such a manner that by means of a state change of the thermal trigger element (3.2) a mechanical pressure is applied to the piezoelement (3.2) via the coupling element (11) so that an electrical signal is produced and the thermal trigger element (3.2) at a defined temperature has a length or volume increase or a change of aggregation state,
**characterised in that** the thermal trigger element (3.2) brings about an action of force directly via the coupling element in order to produce the mechanical pressure on the piezoelement.

2. Detector (3) according to claim 1, **characterised in that** the thermal trigger element (3.1) is a sprinkler bulb, a fusible link, a memory metal element or pyroelement.

3. Detector (3) according to claims 1 and 2, **characterised in that** a charge amplification of the charges produced on the piezoelement (3.2) and/or another signal provision signal use are carried out via a circuit (12).

4. Detector (3) according to any one of claims 1 to 3, **characterised in that** the coupling element is at least one spring (9) and/or a tappet (8).

5. Detector (3) according to any one of claims 1 to 4, **characterised in that** the electrical signal produced by means of the detector (3) is directed via a cable (4) to an evaluation device (7) or a valve (2).

6. Detector (3) according to claim 5, **characterised in that** the evaluation device (7) is a central fire alarm system and/or control centre.

7. Detector (3) according to claim 5, **characterised in that** the valve (2) contains an electrically demagnetisable permanent magnet (2).

## Revendications

1. Système d'avertissement (3) indépendant de l'énergie extérieure, pour lequel aucune batterie, aucun accumulateur et aucune alimentation en courant externe ne sont prévus et qui génère, à une température définie, un signal de tension ou de courant à des fins de signalisation, de commutation ou de commande,
dans lequel
un élément de déclenchement (3.2) thermique, au moins un élément piézoélectrique (3.1) et un élément de couplage (11) sont disposés dans un support/boîtier (3.3) de telle sorte qu'une pression mécanique est exercée sur l'élément piézoélectrique (3.2) par l'intermédiaire de l'élément de couplage (11) du fait d'une modification d'état de l'élément de déclenchement (3.2) thermique de sorte qu'un signal électrique apparaisse et l'élément de déclenchement (3.2) thermique présente à une température définie une augmentation de longueur ou de volume ou une modification d'état de groupe,
**caractérisé en ce que** l'élément de déclenchement (3.2) thermique entraîne une action de force directement par l'intermédiaire de l'élément de couplage pour générer la pression mécanique sur l'élément piézoélectrique.

2. Système d'avertissement (3) selon la revendication 1, **caractérisé en ce que** l'élément de déclenchement (3.1) thermique constitue une ampoule de sprinkler, un fusible, un élément métallique à mémoire ou un pyroélément.

3. Système d'avertissement (3) selon les revendications 1 et 2, **caractérisé en ce qu'**une amplification de charge des charges générées au niveau de l'élément piézoélectrique (3.2) et/ou une autre préparation de signaux, une utilisation de signaux sont effectuées par l'intermédiaire d'un circuit (12).

4. Système d'avertissement (3) selon l'une quelconque des revendications 1 à 3, **caractérisé en ce que** l'élément de couplage constitue au moins un ressort (9) et/ou un coulisseau (8).

5. Système d'avertissement (3) selon l'une quelconque des revendications 1 à 4, **caractérisé en ce que** le signal électrique généré par le système d'avertissement (3) est acheminé par l'intermédiaire d'un câble (4) à un dispositif d'évaluation (7) ou une soupape (2).

6. Système d'avertissement (3) selon la revendication 5, **caractérisé en ce que** le dispositif d'évaluation (7) constitue un poste central d'avertissement d'incendie et/ou de commande.

7. Système d'avertissement (3) selon la revendication 5, **caractérisé en ce que** la soupape (2) contient un aimant permanent (2) pouvant être démagnétisé électriquement.
